# EUROPÄISCHE PATENTANMELDUNG

(11) **EP 4 063 783 A1**
(43) Veröffentlichungstag der Anmeldung: **28.09.2022**
(21) Anmeldenummer: 21164938.9
(22) Anmeldetag: 25.03.2021
(51) Int. Cl.: G01B 11/26, B21D 5/00, G01B 11/245, G01B 11/25

(54) **VERFAHREN UND VORRICHTUNG ZUR BIEGEWINKELBESTIMMUNG AN EINER BIEGEMASCHINE**

(71) Anmelder: Bystronic Laser AG, 3362 Niederönz (CH)
(72) Erfinder: Lührs, Kevin, 99869 Drei Gleichen (DE)
(74) Vertreter: Fink Numrich Patentanwälte PartmbB

(57) **Zusammenfassung**

Die Erfindung betrifft ein Verfahren zur Biegewinkelbestimmung an einer Biegemaschine (1), wobei die Biegemaschine (1) ein Oberwerkzeug (2) und ein Unterwerkzeug (3) umfasst, um ein Werkstück (6) durch Biegen entlang einer Biegelinie (BL) umzuformen, wobei an der Biegemaschine (1) eine oder mehrere Messanordnungen (4, 4') positioniert sind, die zusammen wenigstens eine Beleuchtungseinrichtung (7) und jeweils wenigstens eine Bilderfassungseinrichtung (8) beinhalten, und wobei jeder Messanordnung (4, 4') ein anderer Flächenabschnitt (SP) des Werkstücks (6) zugeordnet ist, der seitlich neben der Biegelinie (BL) liegt und sich entlang der Biegelinie (BL) erstreckt, wobei
- auf das Werkstück (6) mittels der wenigstens einen Beleuchtungseinrichtung (7) einer jeweiligen Messanordnung (4, 4') ein Lichtmuster (LP) auf den zugeordneten Flächenabschnitt (SP) abgebildet wird, wobei das Lichtmuster (LP) eine Vielzahl von Zonen (Z1, Z2, ..., Z6) enthält, die entlang der Biegelinie (BL) nebeneinander angeordnet sind;
- mittels der wenigstens einen Bilderfassungseinrichtung (8) der jeweiligen Messanordnung (4, 4') das Lichtmuster (LP) erfasst wird, wodurch Bildinformationen (IN) des Lichtmusters (LP) erhalten werden;
- mittels einer Auswerteeinrichtung (5) aus den Bildinformationen (IN) des Lichtmusters (LP) der jeweiligen Messanordnung (4, 4') die darin enthaltenen Zonen (Z1, Z2, ..., Z6) identifiziert werden und für jede Zone (Z1, Z2, ..., Z6) ein durch Biegeumformen verursachter Biegewinkel (BA) des zugeordneten Flächenabschnitts (SP) des Werkstücks (6) ermittelt wird.

## Beschreibung

Die Erfindung betrifft ein Verfahren und eine Vorrichtung zur Biegewinkelbestimmung an einer Biegemaschine sowie eine entsprechende Biegemaschine.

Aus dem Stand der Technik sind Messanordnungen bekannt, um an einer Biegemaschine beim Biegeumformen eines Werkstücks bzw. Blechs den dadurch verursachten Biegewinkel des Werkstücks berührungslos zu ermitteln. Insbesondere werden hierzu optische Verfahren genutzt, bei denen ein Lichtmuster auf einen Abschnitt des umgeformten Werkstücks gerichtet wird und durch eine Kamera aufgenommen wird. Über die Deformation dieses Lichtmusters im Rahmen des Biegeumformens kann dann der Biegewinkel mit bekannten Methoden der Trigonometrie berechnet werden.

Die Druckschrift WO 2016/058020 A1 beschreibt ein Biegewinkel-Messverfahren, bei dem während des Biegeumformens eines Werkstücks ein Lichtmuster auf die Unterseite des Werkstücks und einen Abschnitt des Unterwerkzeugs mit einer Beleuchtungsvorrichtung abgebildet wird und durch eine Bilderfassungseinrichtung erfasst wird. Aus den erfassten Bildinformationen kann dann der Biegewinkel ermittelt werden. Gegebenenfalls kann die Biegewinkel-Messvorrichtung entlang der Biegelinie des Werkstücks bewegt werden, um den Biegewinkel in unterschiedlichen Bereichen des Werkstücks zu bestimmen.

Dokument WO 2010/053428 A1 offenbart ähnlich wie die oben genannte Druckschrift eine Biegewinkel-Messvorrichtung, bei der ein Lichtmuster, das auf ein Werkstück während des Biegeumformens gerichtet wird, erfasst wird, um hieraus den Biegewinkel des Werkstücks abzuleiten. Die dort gezeigte Messvorrichtung kann auch entlang der Biegelinie bewegt werden. Ferner können die erfassten Biegewinkel dazu verwendet werden, um die Bombierung bzw. Wölbung des Unterwerkzeugs anzupassen.

In den Biegewinkel-Messvorrichtungen, die in den oben genannten Dokumenten beschrieben sind, kann der Biegewinkel zu einem entsprechenden Messzeitpunkt immer nur für eine bestimmte Stelle auf dem Werkstück ermittelt werden. Zwar kann die Position der Biegewinkelbestimmung verändert werden, jedoch muss hierfür die Messvorrichtung mechanisch bewegt werden. Dies führt zu Ungenauigkeiten bei der Biegewinkelbestimmung.

Aufgabe der Erfindung ist es, ein Verfahren und eine Vorrichtung zur Biegewinkelbestimmung an einer Biegemaschine zu schaffen, mit denen Biegewinkel für eine Vielzahl von Positionen entlang der Biegelinie mit hoher Genauigkeit ermittelt werden können.

Diese Aufgabe wird durch das Verfahren gemäß Patentanspruch 1 bzw. die Vorrichtung gemäß Patentanspruch 14 gelöst. Weiterbildungen der Erfindung sind in den abhängigen Ansprüchen definiert.

Das erfindungsgemäße Verfahren dient zur Biegewinkelbestimmung an einer Biegemaschine, wobei die Biegemaschine in an sich bekannter Weise ein Oberwerkzeug und ein Unterwerkzeug umfasst, um ein Werkstück und vorzugsweise ein Blech, das zwischen Oberwerkzeug und Unterwerkzeug angeordnet ist, durch Biegen entlang einer Biegelinie umzuformen. An der Biegemaschine sind eine oder mehrere Messanordnungen positioniert, die zusammen wenigstens eine Beleuchtungseinrichtung (d.h. eine einzelne oder mehrere Beleuchtungseinrichtungen) und jeweils wenigstens eine Bilderfassungseinrichtung (d.h. eine einzelne oder mehrere Bilderfassungseinrichtungen) beinhalten. Mit anderen Worten gehört zu jeder Messanordnung zumindest eine Beleuchtungseinrichtung, wobei die gleiche Beleuchtungseinrichtung gegebenenfalls auch zu mehreren Messanordnungen gehören kann. Vorzugsweise ist für jede Messanordnung separat wenigstens eine (andere) Beleuchtungseinrichtung vorgesehen. Jeder Messanordnung ist ein anderer Flächenabschnitt des Werkstücks zugeordnet, der seitlich neben der Biegelinie liegt und sich entlang der Biegelinie erstreckt. Im Falle von mehreren Messanordnungen sind die Bereiche der einzelnen Flächenabschnitte vorzugsweise disjunkt, sie können jedoch gegebenenfalls auch überlappen.

Im Rahmen des erfindungsgemäßen Verfahrens wird auf das Werkstück mittels der wenigstens einen Beleuchtungseinrichtung einer jeweiligen Messanordnung (d.h. jeder Messanordnung) ein Lichtmuster auf den zugeordneten Flächenabschnitt abgebildet. Das Lichtmuster stellt somit eine Lichtverteilung dar, die auf einmal auf das Werkstück abgebildet wird und nicht sukzessive zu verschiedenen Zeitpunkten generiert wird. Unter einem Lichtmuster ist dabei ein Muster aus elektromagnetischer Strahlung im Wellenlängenbereich zwischen Ultraviolett und Infrarot zu verstehen, d.h. das Lichtmuster kann sichtbares Licht und gegebenenfalls auch nicht-sichtbares Licht im Ultraviolett- bzw. Infrarotbereich umfassen. Das entsprechend abgebildete Lichtmuster umfasst eine Vielzahl von Zonen, die entlang der Biegelinie nebeneinander angeordnet sind. Vorzugsweise stellen die Zonen disjunkte, nicht überlappende Bereiche dar, die ferner vorzugsweise (unmittelbar) aneinander angrenzen.

Mittels der wenigstens einen Bilderfassungseinrichtung der jeweiligen Messanordnung wird das abgebildete Lichtmuster erfasst, wodurch Bildinformationen des Lichtmusters erhalten werden. Diese Bildinformationen werden mittels einer Auswerteeinrichtung weiterverarbeitet, welche aus den Bildinformationen des Lichtmusters der jeweiligen Messanordnung die darin enthaltenen Zonen identifiziert und für jede Zone einen durch Biegeumformen verursachten Biegewinkel des zugeordneten Flächenabschnitt des Werkstücks ermittelt.

Das erfindungsgemäße Verfahren weist den Vorteil auf, dass mehrere Biegewinkel berührungslos und ohne mechanische Bewegung von Messanordnungen für eine Vielzahl von unterschiedlichen Bereichen entlang der Biegelinie gleichzeitig bzw. simultan ermittelt werden können. Hierzu ist das Lichtmuster in verschiedene Zonen eingeteilt, die in den Bildinformationen des entsprechend erfassten Lichtmusters identifiziert werden. Für diese Identifikation können an sich bekannte Methoden der Bildanalyse genutzt werden. Ebenfalls können an sich bekannte Bildverarbeitungsverfahren zur Bestimmung des Biegewinkels in den jeweiligen Zonen eingesetzt werden. Beispielsweise können in den einzelnen Zonen jeweilige Punktewolken bestimmt werden, welche dreidimensionale Positionen des Lichtmusters auf dem Werkstück repräsentieren. Aus diesen Punktewolken kann dann mittels linearer Regression eine Steigung und hieraus der Biegewinkel abgeleitet werden. Ebenso kann aus der Deformation des Lichtmusters in der entsprechenden Zone, beispielsweise aus der Deformation einer Linie im Lichtmuster, der Biegewinkel abgeleitet werden. Ein aufwändiges, zeitlich gestaffeltes und damit fehleranfälliges Ermitteln von Biegewinkeln von Bereich zu Bereich kann erfindungsgemäß entfallen.

In einer Variante des erfindungsgemäßen Verfahrens ist die wenigstens eine Bilderfassungseinrichtung von zumindest einer Messanordnung und gegebenenfalls von jeder Messanordnung eine 3D-Bilderfassungseinrichtung (z.B. eine 3D-Kamera), mit der dreidimensionale Bildinformationen erfasst werden. Alternativ oder zusätzlich ist es auch möglich, dass die wenigstens eine Bilderfassungseinrichtung von zumindest einer Messanordnung und gegebenenfalls von jeder Messanordnung eine 2D-Bilderfassungseinrichtung (z.B. eine monokulare Kamera) ist, mit der zweidimensionale Bildinformationen erfasst werden.

In einer weiteren bevorzugten Ausführungsform des erfindungsgemäßen Verfahrens sind für zumindest eine Messanordnung und gegebenenfalls für jede Messanordnung die Zonen in dem Lichtmuster über jeweilige räumliche Ausdehnungen entlang der Biegelinie definiert, die in der Auswerteeinrichtung (als digitale Daten) hinterlegt sind. Die wenigstens eine Bilderfassungseinrichtung ist in diesem Fall eine 3D-Bilderfassungseinrichtung, die aus den erfassten dreidimensionalen Bildinformationen des Lichtmusters die räumlichen Ausdehnungen der Zonen durch Abgleich mit den in der Auswerteeinrichtung hinterlegten räumlichen Ausdehnungen ermittelt und hierdurch die Zonen identifiziert. Diese Variante hat den Vorteil, dass Informationen zu den Zonen rein basierend auf digitalen Daten hinterlegt werden können und sich nicht unmittelbar aus dem Lichtmuster selbst ergeben müssen.

In einer weiteren Ausgestaltung des erfindungsgemäßen Verfahrens sind für zumindest eine Messanordnung und gegebenenfalls für jede Messanordnung die Zonen in dem Lichtmuster codiert, wobei die Auswerteeinrichtung diese Codierung aus den erfassten Bildinformationen des Lichtmusters decodiert und hierdurch die Zonen identifiziert. Diese Variante benötigt zwar spezielle Lichtmuster, aus denen die Zonen abgeleitet werden können, jedoch besteht die Möglichkeit, dass gegebenenfalls eine 2D-Bilderfassungseinrichtung zur Erfassung des Lichtmusters genutzt wird.

In einer bevorzugten Variante der soeben beschriebenen Ausführungsform sind eine oder mehrere Zonen und insbesondere alle Zonen der Vielzahl von Zonen über Lichtfrequenzen und/oder über Helligkeiten im Lichtmuster codiert. Mit anderen Worten können die Zonen über spezielle Farben bzw. Farbmischungen bzw. über Grauabstufungen identifiziert werden.

In einer bevorzugten Ausgestaltung der soeben beschriebenen Ausführungsform enthalten eine oder mehrere Zonen und insbesondere alle Zonen der Vielzahl von Zonen Streifen mit unterschiedlichen Helligkeiten und/oder Frequenzspektren, wobei ein Frequenzspektrum eine einzelne Frequenz oder auch einen Frequenzbereich umfassen kann. Die Streifen erstrecken sich vorzugsweise senkrecht zur Biegelinie auf dem Werkstück, wodurch die Bestimmung des Biegewinkels vereinfacht wird. Vorzugsweise grenzen die Streifen (unmittelbar) aneinander an und repräsentieren an ihren benachbarten Rändern eindeutige Lichtfrequenz- und/oder Helligkeitsübergänge, die jeweils nur einmal im Lichtmuster vorkommen. Durch Identifikation dieser Ränder kann deren Deformation ermittelt werden und hieraus basierend auf dem an sich bekannten Lichtschnittverfahren der Biegewinkel berechnet werden.

In einer weiteren bevorzugten Ausgestaltung sind ein oder mehrere Zonen und insbesondere alle Zonen der Vielzahl von Zonen über verschieden gemusterte Bereiche codiert. Beispielsweise kann ein jeweiliger gemusterter Bereich die gleichen Typen von graphischen Elementen zur Musterbildung im jeweiligen gemusterten Bereich enthalten, wobei sich die Typen von graphischen Elementen zwischen den gemusterten Bereichen unterscheiden.

In einer weiteren bevorzugten Ausgestaltung wird für zumindest eine Messanordnung und gegebenenfalls für jede Messanordnung das Lichtmuster auch auf einen Bereich des Unterwerkzeugs oder Oberwerkzeugs abgebildet, wobei durch Auswertung der mit der wenigstens einen Bilderfassungseinrichtung erfassten Bildinformationen dieses Bereichs die Biegewinkel für die Zonen in Bezug zu diesem Bereich mittels der Auswerteeinrichtung ermittelt werden. Hierdurch kann der Biegewinkel auch in Relation zu der Ausrichtung des entsprechenden Biegewerkzeugs berechnet werden.

In einer weiteren bevorzugten Variante des erfindungsgemäßen Verfahrens sind mehrere Messanordnungen an der Biegemaschine positioniert, deren wenigstens eine Beleuchtungseinrichtung Lichtmuster mit den gleichen oder überlappenden Ausdehnungen entlang der Biegelinie auf unterschiedliche und vorzugsweise disjunkte Flächenabschnitte abbilden, wodurch mittels der Auswerteeinrichtung für eine Vielzahl von Positionen oder Abschnitten entlang der Biegelinie jeweils mehrere Biegewinkel ermittelt werden, die auf Lichtmuster von unterschiedlichen Messanordnungen zurückgehen. Aus den mehreren Biegewinkeln wird mittels der Auswerteeinrichtung ein gemittelter Biegewinkel oder ein Biegewinkel zwischen zwei um die Biegelinie gebogenen Biegebereichen des Werkstücks für jede Position oder jeden Abschnitt berechnet. Hierdurch kann die Genauigkeit der Bestimmung des Biegewinkels verbessert werden.

In einer bevorzugten Variante der soeben beschriebenen Ausführungsform enthalten alle Lichtmuster der mehreren Messanordnungen identische Aufteilungen in Zonen entlang der Biegelinie, so dass die oben definierten Positionen bzw. Abschnitte entlang der Biegelinie mit entsprechenden Zonen korrelieren und hierdurch die Bestimmung der gemittelten Biegewinkel bzw. der Biegewinkel zwischen zwei um die Biegelinie gebogenen Biegebereichen des Werkstücks vereinfacht wird.

In einer weiteren bevorzugten Variante des erfindungsgemäßen Verfahrens werden ausgelöst durch die Auswerteeinrichtung ein oder mehrere Parameter der Biegemaschine während des Biegeumformens in Abhängigkeit von den ermittelten Biegewinkeln verändert. Mit anderen Worten wird in Abhängigkeit von den Biegewinkeln auf eine entsprechende Steuerung der Biegemaschine eingewirkt, um deren Biegeprozess anzupassen.

In einer weiteren bevorzugten Variante verfügt die Biegemaschine über eine automatisch betätigbare Bombierungseinrichtung zur Erzeugung einer Wölbung des Unterwerkzeugs während des Biegeumformens, wobei diese Wölbung in Abhängigkeit von den ermittelten Biegewinkeln angepasst wird. Automatisch betätigbare Bombierungseinrichtungen sind an sich bekannt und dienen dazu, eine während des Biegeprozesses hervorgerufene Wölbung des Oberwerkzeugs nach oben durch eine entsprechende Wölbung des Unterwerkzeugs auszugleichen. Indem die Biegewinkel für unterschiedliche Zonen bestimmt werden, kann die Wölbung des Unterwerkzeugs geeignet nachgeführt werden, wodurch die Qualität der Biegeumformung verbessert wird.

In einer bevorzugten Ausführungsform umfasst die automatisch betätigbare Bombierungseinrichtung mehrere Bombierungszylinder, die entlang der Biegelinie nebeneinander angeordnet sind. Dabei kann jede Zone genau einem Bombierungszylinder zugeordnet sein, wodurch die Bombierung an den in der Zone gemessenen Biegewinkel angepasst werden kann. Alternativ können auch zwei oder mehrere Zonen einem Bombierungszylinder zugeordnet sein.

Neben dem oben beschriebenen Verfahren betrifft die Erfindung eine Vorrichtung zur Biegewinkelbestimmung an einer Biegemaschine, wobei die Biegemaschine ein Oberwerkzeug und ein Unterwerkzeug umfasst, um ein Werkstück und insbesondere ein Blech, das zwischen Oberwerkzeug und Unterwerkzeug angeordnet ist, durch Biegen entlang einer Biegelinie umzuformen. Die Vorrichtung weist eine Auswerteeinrichtung und eine oder mehrere Messanordnungen auf. Die Messanordnung oder Messanordnungen sind dazu eingerichtet, in einer Betriebsposition der Vorrichtung an der Biegemaschine positioniert zu werden. Die Messanordnung oder Messanordnungen beinhalten zusammen wenigstens eine Beleuchtungseinrichtung. Ferner beinhalten sie jeweils wenigstens eine Bilderfassungseinrichtung. In der Betriebsposition der Vorrichtung ist jeder Messanordnung ein anderer Flächenabschnitt des Werkstücks zugeordnet, der seitlich neben der Biegelinie liegt und sich entlang der Biegelinie erstreckt.

Die erfindungsgemäße Vorrichtung ist derart ausgestaltet, dass in der Betriebsposition die nachfolgend erläuterten Schritte durchgeführt werden. Auf das Werkstück wird mittels der wenigstens einen Beleuchtungseinrichtung einer jeweiligen Messanordnung (d.h. jeder Messanordnung) ein Lichtmuster auf den zugeordneten Flächenabschnitt abgebildet, wobei das Lichtmuster eine Vielzahl von Zonen enthält, die entlang der Biegelinie nebeneinander angeordnet sind. Mittels der wenigstens einen Bilderfassungseinrichtung der jeweiligen Messanordnung wird das Lichtmuster erfasst, wodurch Bildinformationen des Lichtmusters erhalten werden. Mittels der Auswerteeinrichtung werden aus den Bildinformationen des Lichtmusters der jeweiligen Messanordnung die darin enthaltenen Zonen identifiziert und für jede Zone wird ein durch Biegeumformen verursachter Biegewinkel des zugeordneten Flächenabschnitts des Werkstücks ermittelt.

Mit anderen Worten ist die oben beschriebene Vorrichtung zur Durchführung des erfindungsgemäßen Verfahrens eingerichtet. Vorzugsweise kann die Vorrichtung auch zur Durchführung einer oder mehrerer bevorzugter Varianten des erfindungsgemäßen Verfahrens konfiguriert sein.

In einer bevorzugten Variante verfügt die Biegemaschine über eine automatisch betätigbare Bombierungseinrichtung zur Erzeugung einer Wölbung des Unterwerkzeugs während des Biegeumformens, wobei die Bombierungseinrichtung dazu eingerichtet ist, diese Bombierung in Abhängigkeit von einem ermittelten Biegewinkel anzupassen.

Neben der soeben beschriebenen Vorrichtung umfasst die Erfindung eine Biegemaschine, die eine solche Vorrichtung enthält.

Ausführungsbeispiele der Erfindung werden nachfolgend anhand der beigefügten Figuren detailliert beschrieben.

Es zeigen:
- Fig. 1: eine perspektivische Darstellung einer Ausführungsform einer Biegemaschine, an der eine Variante einer erfindungsgemäßen Vorrichtung zur Biegewinkelbestimmung angebracht ist;
- Fig. 2: eine Schnittansicht senkrecht zur Biegelinie der Biegemaschine aus Fig. 1, in der verschiedene Optionen zur Anordnung entsprechender Messeinrichtungen verdeutlicht sind;
- Fig. 3 bis Fig. 5: verschiedene Beispiele von Lichtmustern, die im Rahmen der Erfindung für die Bestimmung von Biegewinkeln auf einem entsprechenden Werkstück während des Biegevorgangs in einer Biegemaschine abgebildet werden können.

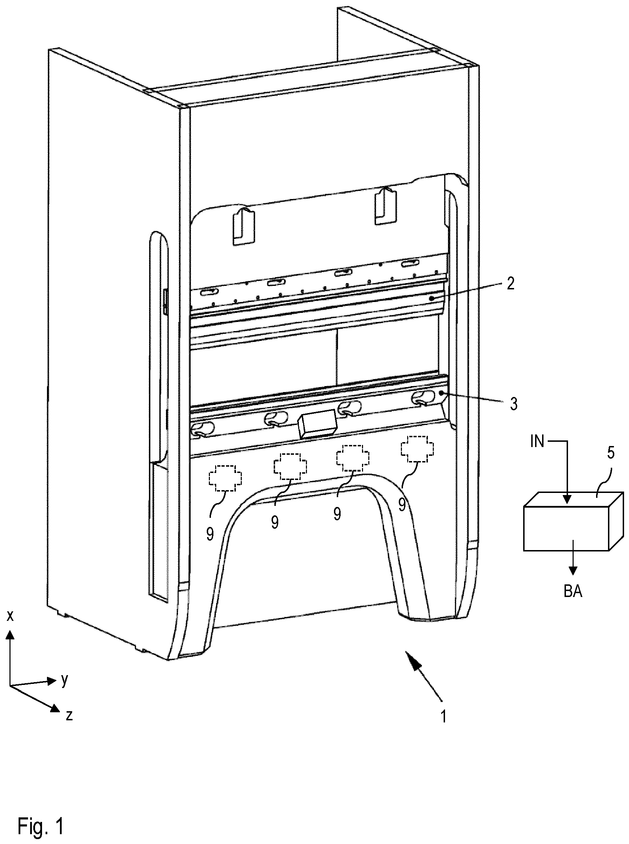

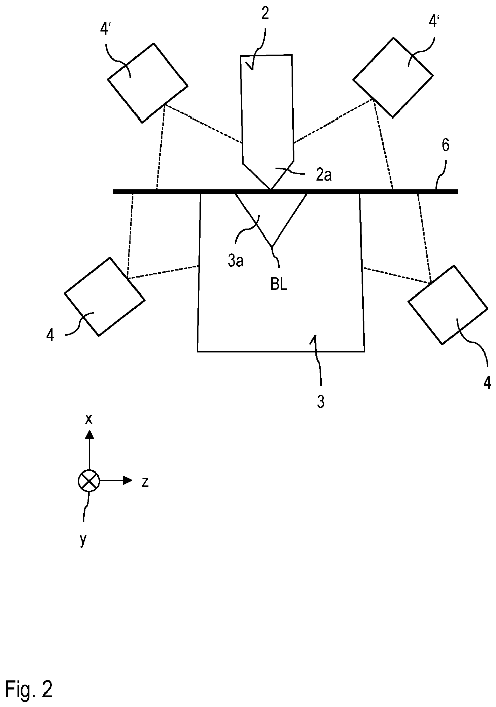

Nachfolgend werden Ausführungsformen der Erfindung anhand einer Biegemaschine 1 in der Form einer Abkantpresse beschrieben. Eine solche Biegemaschine ist in Fig. 1 in perspektivischer Darstellung gezeigt. In an sich bekannter Weise umfasst die Biegemaschine ein Oberwerkzeug 2 und ein Unterwerkzeug 3, zwischen denen ein zu biegendes Werkstück 6 in der Form eines Blechs (siehe Fig. 2) eingeschoben wird. Mittels eines Aktuators wird ein Biegeumformen des Werkstücks durch Bewegen des Oberwerkzeugs 2 nach unten in das Unterwerkzeug 3 hinein bewirkt, wie noch näher anhand von Fig. 2 erläutert wird. Die hierdurch erzeugte Biegung erfolgt entlang einer in Längsrichtung des Oberwerkzeugs und Unterwerkzeugs verlaufenden Biegelinie BL (siehe Fig. 2), welche der Richtung y des in Figuren 1 bis 5 dargestellten Koordinatensystems entspricht. Die x-Richtung dieses Koordinatensystems entspricht der vertikalen Höhenrichtung und die z-Richtung einer horizontalen Richtung, die entgegengesetzt zu der Richtung verläuft, in der ein umzuformendes Werkstück von vorne in die Biegemaschine 1 eingeschoben wird.

Zur Überwachung des Biegeprozesses in der Biegemaschine 1 wird eine Vorrichtung genutzt, die eine Messanordnung 4 sowie eine Auswerteeinrichtung 5 umfasst. Die Messanordnung 4 ist auf der Vorderseite der Biegemaschine 1 benachbart zum Unterwerkzeug 3 positioniert und bildet im Betrieb ein Lichtmuster auf die Unterseite des gerade umgeformten Werkstücks sowie zum Teil auch auf einen Bereich des Unterwerkzeugs 3 ab. Das Lichtmuster wird anschließend mittels der Messanordnung als digitales Bild erfasst, und die hierdurch gewonnenen Bildinformationen IN werden der Auswerteeinrichtung 5 zugeführt, die kommunikationstechnisch mit der Messanordnung 4 verbunden ist. Mittels der Auswerteeinrichtung 5 wird aus dem Lichtmuster eine Vielzahl von Biegewinkeln BA für mehrere unterschiedliche Zonen entlang der Biegelinie bzw. y-Achse ermittelt, wie weiter unten näher erläutert wird.

Die Auswerteeinrichtung 5 ist mit einer entsprechenden Benutzerschnittstelle an der Biegemaschine oder einer entfernt davon angeordneten Benutzerschnittstelle kommunikationstechnisch verbunden, so dass einem Benutzer entsprechende Informationen zu den Biegewinkeln angezeigt werden können. Gegebenenfalls kann die Auswerteeinrichtung auch automatisch auf eine (nicht gezeigte) Steuerung der Biegemaschine einwirken, um hierdurch Unregelmäßigkeiten während des Biegeprozesses auszugleichen, z.B. durch Anpassung einer automatisch betätigbaren Bombierungseinrichtung, wie weiter unten noch näher beschrieben wird.

Der wesentliche Unterschied der hier beschriebenen Biegewinkelbestimmung gegenüber herkömmlichen Verfahren besteht darin, dass in einem einzelnen Lichtmuster, das auf das Werkstück abgebildet wird, mehrere Zonen entlang der Biegelinie identifiziert werden, für die separat Biegewinkel ermittelt werden. Es ist somit nicht mehr erforderlich, die entsprechende Anordnung zur Messung von Biegewinkeln in verschiedene Positionen entlang der Biegelinie mechanisch zu bewegen, wie dies im Stand der Technik der Fall ist.

Die Information über die Biegewinkel für verschiedene Abschnitte bzw. Zonen des Werkstücks entlang der Biegelinie ist ein wichtiger Parameter, um Fehlfunktionen während des Biegens im Rahmen einer Qualitätssicherung zu erkennen bzw. Parameter der Biegemaschine zu optimieren. Oftmals enthält eine Biegemaschine eine automatisch betätigbare Bombierungseinrichtung, die z.B. über Hydraulikzylinder eine Wölbung des Unterwerkzeugs verursacht. Diese Wölbung des Unterwerkzeugs kann unter Berücksichtigung der Biegewinkel in den verschiedenen Zonen angepasst werden, um einer Wölbung des Oberwerkzeugs, die beim Biegeprozess auftritt, zielgerichtet entgegenzuwirken. Hierdurch wird eine gleichmäßige Biegung des Werkstücks entlang der Biegelinie gewährleistet.

Auch die Biegemaschine gemäß Fig. 1 beinhaltet eine entsprechende Bombierungseinrichtung, die vier, in y-Richtung nebeneinander angeordnete und gestrichelt dargestellte Bombierungszylinder 9 umfasst, die in der Unterwange unterhalb des Unterwerkzeugs 3 angeordnet sind. Dabei kann jede Zone des auf das Unterwerkzeug gerichteten Lichtmusters genau einem Bombierungszylinder zugeordnet sein. Hierdurch kann die Bombierung an die in der Zone gemessenen Winkelabweichung angepasst werden. Alternativ können auch zwei oder mehrere Zonen einem Bombierungszylinder zugeordnet sein.

Auch im Falle, dass die Bombierung in der Biegemaschine mechanisch über geeignete Keile vorab eingestellt wird, kann im Rahmen der Instandhaltung der Maschine die Bombierung über die ermittelten Biegewinkel entlang der Biegelinie kontrolliert werden und gegebenenfalls geeignet angepasst werden. Darüber hinaus können durch die Bestimmung der Biegewinkel in den verschiedenen Zonen auch Unregelmäßigkeiten bei der Rückfederung des gebogenen Werkstücks, die bei der Unterbrechung bzw. Beendigung des Biegevorgangs auftritt, auf einfache Weise erkannt werden.

In der Ausführungsform der Fig. 1 ist lediglich eine einzelne Messanordnung 4 auf der Vorderseite der Biegemaschine 1 vorgesehen. Alternativ oder zusätzlich kann eine entsprechende Messanordnung auch auf der entgegengesetzten Seite des Unterwerkzeugs 3 positioniert sein. Vorzugsweise werden die Daten beider Messeinrichtungen in der Auswerteeinrichtung 5 miteinander verrechnet, um hierdurch die jeweiligen Biegewinkel der beiden zueinander gebogenen Abschnitte des verformten Werkstücks zu bestimmen.

Fig. 2 zeigt eine Schnittansicht entlang der x-z-Ebene des Koordinatensystems der Fig. 1. Die Schnittebene verläuft senkrecht zur Biegelinie BL durch einen Bereich des Oberwerkzeugs 2 und des Unterwerkzeugs 3. Es ist dabei der Zeitpunkt des Beginns einer Krafteinwirkung auf das Werkstück bzw. Blech 6 gezeigt. Aus Fig. 2 erkennt man im Detail die Form des Oberwerkzeugs 2 und des Unterwerkzeugs 3. Das Oberwerkzeug 2 bildet einen Stempel mit einem unteren Keil 2a, der einen dreiecksförmigem Querschnitt aufweist. Dieser Keil 2a wird in eine korrespondierende Nut 3a im Unterwerkzeug 3 hinein bewegt. Das Unterwerkzeug wird häufig auch als Matrize bezeichnet. Die Biegelinie BL entspricht der entlang der y-Richtung verlaufenden Spitze der Nut 3a.

Beim Biegevorgang ist das umzuformende Werkstück 6 zwischen dem Oberwerkzeug 2 und dem Unterwerkzeug 3 positioniert, so dass das Hineinbewegen des Oberwerkzeugs 2 in das Unterwerkzeug 3 eine Verbiegung des Werkstücks 6 entlang der Biegelinie BL bewirkt. Die hierdurch hervorgerufenen Biegewinkel können mit entsprechenden Messanordnungen 4 bzw. 4' kontinuierlich erfasst werden. Der Erfassungsbereich der jeweiligen Messanordnungen ist durch gestrichelte Linien angedeutet. Beispielhaft ist in Fig. 2 ein Messsystem aus zwei Messanordnungen 4 dargestellt, die unterhalb des Werkstücks 6 positioniert sind und jeweilige Lichtmuster auf separate Abschnitte der Unterseite des Werkstücks werfen. Ein jeweiliges Lichtmuster fällt dabei auch auf eine vertikal verlaufende Fläche des Unterwerkzeugs 3. Die jeweiligen Lichtmuster werden in der vorliegenden Ausführungsform mit jeweils einer Bilderfassungseinrichtung 8 der entsprechenden Messanordnungen 4, 4' erfasst. Es können alternativ auch mehr als eine Bilderfassungseinrichtung 8 je Messanordnung vorgesehen sein.

Mittels einer Auswertung der über die Messanordnungen 4 erfassten Lichtmuster durch eine entsprechende Auswerteeinrichtung 5 (siehe Fig. 1) kann die Biegung des Werkstücks 6 relativ zu dem Unterwerkzeug 3 bestimmt werden. Im Besonderen kann auch eine Schrägstellung des Oberwerkzeugs und gegebenenfalls auch die Abnutzung der Werkzeuge erfasst werden. Alternativ oder zusätzlich können eine oder mehrere Messanordnungen 4' auch oberhalb des zu biegenden Werkstücks 6 positioniert sein, um dort in Kombination mit einer Auswerteeinrichtung 5 die Biegung des Werkstücks in zwei Abschnitten seitlich neben der Biegelinie BL zu ermitteln.

Nachfolgend werden Ausführungsformen beschrieben, bei denen nur eine einzelne Messanordnung 4 unterhalb des Werkstücks 6 in Kombination mit einer Auswerteeinrichtung 5 zur Biegewinkelbestimmung verwendet wird. Es liegt jedoch im Rahmen von fachmännischem Handeln, die Daten von mehreren Messanordnungen zur genaueren Bestimmung des Biegewinkels miteinander zu verrechnen.

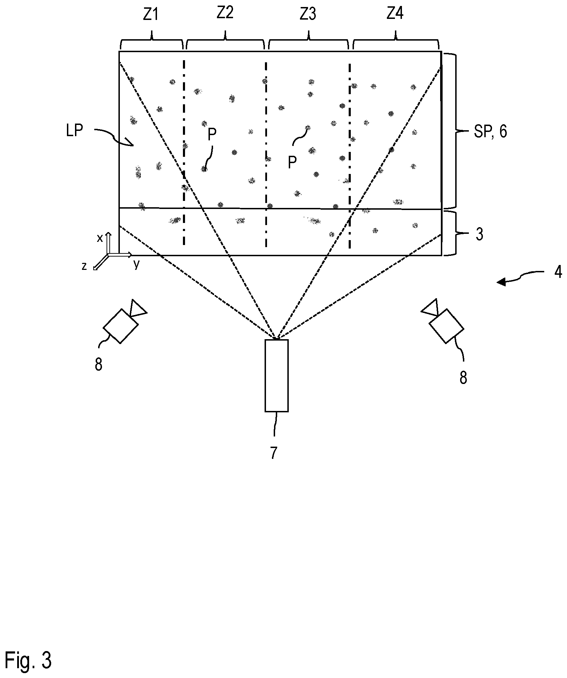

Fig. 3 bis Fig. 5 betreffen verschiedene Realisierungen einer entsprechenden Messanordnung 4. Die Figuren zeigen dabei eine Ansicht von vorne auf die Unterseite des gerade gebogenen Werkstücks 6. Gemäß der Ausführungsform der Fig. 3 beinhaltet die Messanordnung 4 eine Beleuchtungseinrichtung 7, mit der ein Lichtmuster LP (LP = Light Pattern) auf einen Flächenabschnitt SP (SP = Surface Portion) der Unterseite des Werkstücks 6 sowie auf eine Seitenfläche des Unterwerkzeugs 3 abgebildet wird. Der Abstrahlbereich der Beleuchtungseinrichtung 7 ist durch vier gestrichelte Linien angedeutet. Zur Erzeugung des Lichtmusters verwendet die Beleuchtungseinrichtung 7 Licht aus dem sichtbaren Spektrum. Nichtsdestotrotz kann das Lichtmuster gegebenenfalls auch durch Licht im nicht-sichtbaren Infrarotbereich bzw. Ultraviolettbereich erzeugt werden. Prinzipiell muss wenigstens eine Beleuchtungseinrichtung 7 für die Messanordnungen 4, 4' insgesamt vorgesehen sein. Idealerweise ist wenigstens eine Beleuchtungseinrichtung 7 für jede der Messanordnungen 4, 4' vorgesehen. Alternativ kann aber auch mehr als eine Beleuchtungseinrichtung 7 je Messanordnungen 4, 4' vorgesehen sein.

In der Ausführungsform der Fig. 3 wird durch die Beleuchtungseinrichtung 7 Licht mit einer bestimmten Farbe bzw. einer bestimmten Farbmischung (z.B. Weißlicht) auf das Werkstück 6 geworfen, d.h. die Beleuchtungseinrichtung erzeugt ein Lichtmuster LP mit einheitlicher Farbe bzw. Farbmischung. Das Lichtmuster LP, das mit einer an sich bekannten Optik (z.B. einer diffraktiven Optik) durch die Beleuchtungseinrichtung 7 generiert wird, umfasst eine Vielzahl von Punkten mit im Wesentlichen gleicher Farbe bzw. Farbmischung auf dem Flächenbereich SP und der Matrize 3. Aus Übersichtlichkeitsgründen sind nur einige dieser Punkte mit dem Bezugszeichen P bezeichnet. Das Lichtmuster LP ist ein unregelmäßiges und vorzugsweise stochastisches Punktemuster.

Das Lichtmuster LP setzt sich aus mehreren Zonen Z1, Z2, Z3 und Z4 zusammen, die entlang der Biegelinie nebeneinanderliegen. Zur Veranschaulichung sind die Zonen über strichpunktierte Linien voneinander getrennt. Diese Linien sind nicht Bestandteil des abgebildeten Punktemusters. In der Ausführungsform der Fig. 3 können rein aus der Struktur des Punktemusters die einzelnen Zonen Z1, Z2, Z3 und Z4 nicht unterschieden werden, d.h. das dargestellte Lichtmuster enthält keine Codierung, welche die Unterscheidbarkeit der Zonen untereinander ermöglicht. In der entsprechenden Auswerteeinrichtung 5 sind jedoch die einzelnen räumlichen Ausdehnungen der Zonen Z1 bis Z4 als digitalen Daten spezifiziert.

In der Ausführungsform der Fig. 3 wird das Lichtmuster LP mit den darin enthaltenen Punkten P mittels einer stereoskopischen 3D-Bilderfassungseinrichtung erfasst, die schematisch durch zwei Kameras 8 angedeutet ist. Die Messanordnung wurde vorab geeignet kalibriert, so dass die erfassten Punkte P dreidimensionalen Positionen in einem ortsfesten Koordinatensystem zugeordnet werden können. Es werden somit aus den dreidimensionalen Bildinformationen der 3D-Bilderfassungseinrichtung die aktuellen dreidimensionalen Positionen der einzelnen Punkte P des Lichtmusters berechnet, d.h. es wird eine Punktewolke ermittelt. Dabei können die einzelnen Punkte den entsprechenden Zonen Z1 bis Z4 zugeordnet werden, da diese Zonen in der Auswerteeinrichtung 5 spezifiziert sind. Mit an sich bekannten Algorithmen führt die Auswerteeinrichtung 5 in jeder der einzelnen Zonen Z1 bis Z4 basierend auf den Positionen der darin enthaltenen Punkte eine lineare Regression durch, um die Steigung der einzelnen Zonen zu bestimmen. Auf diese Weise werden entsprechende Biegewinkel des Flächenbereichs SP in den einzelnen Zonen Z1 bis Z4 bestimmt. Aufgrund der Verwendung des symmetrischen Stempels 3 kann hierdurch der Biegewinkel zwischen den beiden sich zueinander verbiegenden Bereichen des Werkstücks in den jeweiligen Zonen bestimmt werden.

In der Ausführungsform der Fig. 3 wird eine 3D-Bilderfassungseinrichtung zur Bestimmung des Biegewinkels in den einzelnen Zonen benötigt, da die Zonen nicht unmittelbar im entsprechenden Lichtmuster LP codiert sind. In den im Folgenden beschriebenen Abwandlungen codieren die generierten Lichtmuster unmittelbar die entsprechende Information über die Zonen. Demzufolge ist es nicht unbedingt erforderlich, die Lichtmuster mittels einer 3D-Bilderfassungseinrichtung zu erfassen, denn durch die Codierung der Zonen kann man auch bei der zweidimensionalen Erfassung des Lichtmusters die räumliche Information über die Biegewinkel mit an sich bekannten Methoden gewinnen.

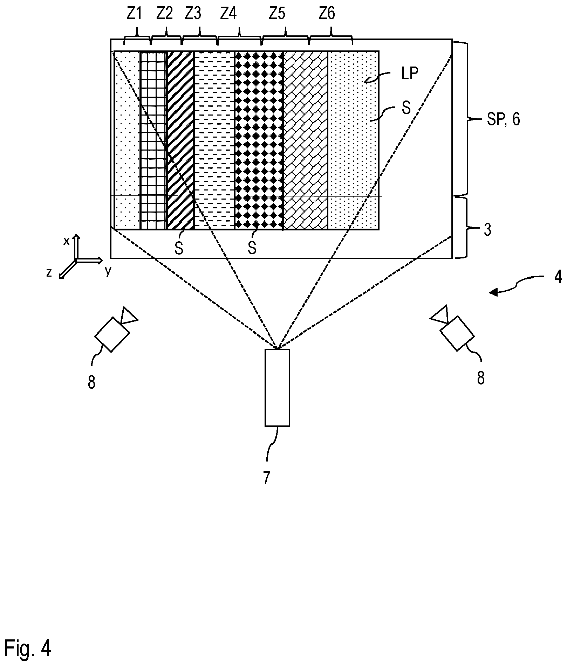

Fig. 4 zeigt eine Variante, in der das Lichtmuster LP mehrere sich senkrecht zur Biegelinie erstreckende Streifen umfasst, die aus Übersichtlichkeitsgründen nur zum Teil mit dem Bezugszeichen S bezeichnet sind. Die Streifen weisen unterschiedliche Graustufen (d.h. Helligkeiten) auf, was in der Schwarzweißdarstellung der Fig. 4 durch unterschiedliche Bemusterungen der einzelnen Streifen zum Ausdruck gebracht wird. Mit anderen Worten werden verschiedene Stellen des Werkstücks 6 unterschiedlich stark beleuchtet. Alternativ oder zusätzlich können die einzelnen Streifen S auch dadurch unterschieden werden, dass sie untereinander verschiedene Farben aufweisen. Mittels solcher Streifen werden die einzelnen Zonen, für die entsprechende Biegewinkel bestimmt werden, in dem Lichtmuster LP codiert.

Die entsprechenden Zonen sind in Fig. 4 mit den Bezugszeichen Z1 bis Z6 bezeichnet und umfassen jeweils Abschnitte von zwei benachbarten Streifen. Mit anderen Worten enthält jede Zone einen Übergang zwischen zwei benachbarten Streifen. Der Übergang ist dabei eineindeutig, d.h. in dem gesamten Muster existiert dieser Übergang von einer Graustufe zur anderen bzw. einer Farbe zur anderen nur einmal. Auf diese Weise kann in dem von der Bilderfassungseinrichtung erfassten Bild jede Zone aus dem Bild selbst extrahiert werden.

In der Ausführungsform der Fig. 4 wird das Lichtmuster LP über zwei 2D-Kameras 8 erfasst. Gegebenenfalls ist es auch möglich, dass nur eine dieser Kameras zur Erfassung des Lichtmusters verwendet wird, da die Zonen bereits im Lichtmuster selbst codiert sind und somit über die Veränderung der jeweiligen Lichtzonen beim Biegevorgang der Biegewinkel bestimmt werden kann. Nichtsdestotrotz kann eine zweite 2D-Kamera dazu genutzt werden, um redundant das gleiche Muster nochmals zu erfassen und somit die Messgenauigkeit zu erhöhen. Ferner besteht auch die Möglichkeit, analog zur Ausführungsform der Fig. 3 ein 3D-Bilderfassungseinrichtung zur Erfassung des Lichtmusters zu verwenden.

In der Ausführungsform der Fig. 4 wird die Information über die Steigung und damit über den Biegewinkel in den einzelnen Zonen basierend auf den entsprechenden Rändern bzw. Übergängen zwischen den Streifen bestimmt. Vorzugsweise wird hierzu das an sich bekannte Lichtschnittverfahren genutzt, das über die Deformation dieser Ränder die Steigung des Werkstücks in den entsprechenden Zonen und damit die zugeordneten Biegewinkel bestimmt. Gegebenenfalls kann diese Information auch aus der dreidimensionalen Position der entsprechenden Ränder zwischen den Streifen ermittelt werden, falls eine 3D-Bilderfassungseinrichtung verwendet wird. Die einzelnen Ränder werden mittels einer üblichen Kantenerfassung unter Verwendung eines Hochpassfilters detektiert.

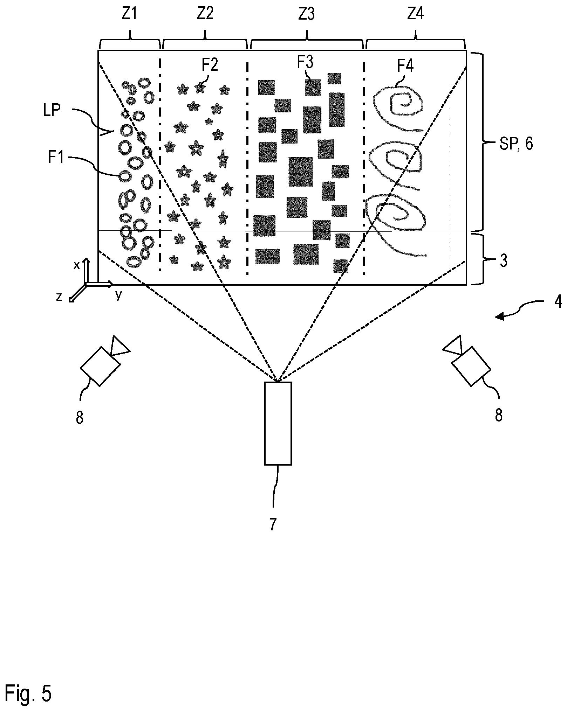

Fig. 5 zeigt eine weitere Ausführungsform, in der die Zonen des auf dem Werkstück 6 abgebildeten Lichtmusters LP über verschieden gemusterte Bereiche voneinander unterschieden werden. Dabei sind vier Zonen Z1 bis Z4 angedeutet, die durch strichpunktierte Linien voneinander getrennt sind. Diese Linien sind nicht Teil des abgebildeten Lichtmusters. Die einzelnen Zonen werden im Lichtmuster über verschiedene Typen von graphischen Elementen unterschieden. Die unterschiedlichen graphischen Elemente sind aus Übersichtlichkeitsgründen in Fig. 5 immer nur einmalig mit entsprechenden Bezugszeichen F1 bis F4 in den jeweiligen Zonen Z1 bis Z4 bezeichnet. In der Zone Z1 werden ringförmige Elemente F1 zur Bildung des dort enthaltenen Musters genutzt. Im Unterschied hierzu verwendet die Zone Z2 Sterne F2, die Zone Z3 Rechtecke F3 und die Zone Z4 Spiralen F4.

Mittels einer 3D-Bilderfassungseinrichtung, die wiederum durch zwei Kameras 8 angedeutet ist, können die dreidimensionalen Positionen der einzelnen graphischen Elemente in den unterschiedlichen Zonen erfasst werden, wobei die Zonen selbst unmittelbar über den Typ der graphischen Elemente identifiziert werden, ohne dass die Zonen vorab in einer entsprechenden Auswerteeinrichtung 5 hinterlegt sein müssen. Es wird somit eine Punktewolke zur Beschreibung der dreidimensionalen Positionen der einzelnen graphischen Elemente bestimmt. Hieraus ermittelt die Auswerteeinrichtung die Steigung des Werkstücks in den einzelnen Zonen. Gegebenenfalls besteht auch die Möglichkeit, die einzelnen Zonen zweidimensional zu erfassen und durch die über die Blechbiegung verursachte Veränderung der Muster in den Zonen die Biegewinkel abzuleiten.

Die im Vorangegangenen beschriebenen Ausführungsformen der Erfindung weisen eine Reihe von Vorteilen auf. Insbesondere wird ohne mechanische Bewegung einer Messanordnung die Möglichkeit geschaffen, den Biegewinkel eines umgeformten Werkstücks innerhalb einer Biegemaschine für eine Vielzahl von unterschiedlichen Positionen entlang der Biegelinie zu bestimmen. Diese Information kann dann in geeigneter Weise weiterverarbeitet werden. Beispielsweise kann sie über eine Benutzerschnittstelle ausgegeben werden oder im Rahmen eines Regelkreises zur Optimierung der Biegemaschine, beispielsweise zur Einstellung der Bombierung oder Anpassung anderer Parameter (z.B. der Stempelposition), genutzt werden.

### Bezugszeichen:

- 1: Biegemaschine
- 2: Oberwerkzeug
- 2a: Keil
- 3: Unterwerkzeug
- 3a: Nut
- 4, 4': Messanordnung
- 5: Auswerteeinrichtung
- 6: Werkstück
- 7: Beleuchtungseinrichtung
- 8: Bilderfassungseinrichtung
- 9: Bombierungszylinder
- IN: Bildinformationen
- BA: Biegewinkel
- x, y, z: Raumrichtungen
- BL: Biegelinie
- Z1, Z2, ..., Z6: Zonen
- LP: Lichtmuster
- SP: Flächenabschnitt
- P: Punkte
- S: Streifen
- F1, F2, F3, F4: graphische Elemente

## Patentansprüche

1. Verfahren zur Biegewinkelbestimmung an einer Biegemaschine (1), wobei die Biegemaschine (1) ein Oberwerkzug (2) und ein Unterwerkzeug (3) umfasst, um ein Werkstück (6), das zwischen Oberwerkzeug (2) und Unterwerkzeug (3) angeordnet ist, durch Biegen entlang einer Biegelinie (BL) umzuformen, wobei an der Biegemaschine (1) eine oder mehrere Messanordnungen (4, 4') positioniert sind, die zusammen wenigstens eine Beleuchtungseinrichtung (7) und jeweils wenigstens eine Bilderfassungseinrichtung (8) beinhalten, und wobei jeder Messanordnung (4, 4') ein anderer Flächenabschnitt (SP) des Werkstücks (6) zugeordnet ist, der seitlich neben der Biegelinie (BL) liegt und sich entlang der Biegelinie (BL) erstreckt, wobei
- auf das Werkstück (6) mittels der wenigstens einen Beleuchtungseinrichtung (7) einer jeweiligen Messanordnung (4, 4') ein Lichtmuster (LP) auf den zugeordneten Flächenabschnitt (SP) abgebildet wird, wobei das Lichtmuster (LP) eine Vielzahl von Zonen (Z1, Z2, ..., Z6) enthält, die entlang der Biegelinie (BL) nebeneinander angeordnet sind;
- mittels der wenigstens einen Bilderfassungseinrichtung (8) der jeweiligen Messanordnung (4, 4') das Lichtmuster (LP) erfasst wird, wodurch Bildinformationen (IN) des Lichtmusters (LP) erhalten werden;
- mittels einer Auswerteeinrichtung (5) aus den Bildinformationen (IN) des Lichtmusters (LP) der jeweiligen Messanordnung (4, 4') die darin enthaltenen Zonen (Z1, Z2, ..., Z6) identifiziert werden und für jede Zone (Z1, Z2, .., Z6) ein durch Biegeumformen verursachter Biegewinkel (BA) des zugeordneten Flächenabschnitts (SP) des Werkstücks (6) ermittelt wird.

2. Verfahren nach Anspruch 1, **dadurch gekennzeichnet, dass** die wenigstens eine Bilderfassungseinrichtung (8) von zumindest einer Messanordnung (4, 4') eine 3D-Bilderfassungseinrichtung ist, mit der dreidimensionale Bildinformationen (IN) erfasst werden, und/oder die wenigstens eine Bilderfassungseinrichtung (8) von zumindest einer Messanordnung (4, 4') eine 2D-Bilderfassungseinrichtung ist, mit der zweidimensionale Bildinformationen (IN) erfasst werden.

3. Verfahren nach Anspruch 1 oder 2, **dadurch gekennzeichnet, dass** für zumindest eine Messanordnung (4, 4') die Zonen (Z1, Z2, ..., Z6) in dem Lichtmuster (LP) über jeweilige räumliche Ausdehnungen entlang der Biegelinie (BL) definiert sind, die in der Auswerteeinrichtung (5) hinterlegt sind, wobei die wenigstens eine Bilderfassungseinrichtung (8) eine 3D-Bilderfassungseinrichtung ist, die aus den erfassten dreidimensionalen Bildinformationen (IN) des Lichtmusters (LP) die räumlichen Ausdehnungen der Zonen (Z1, Z2, ..., Z6) durch Abgleich mit den in der Auswerteeinrichtung (5) hiterlegten räumlichen Ausdehnungen ermittelt und hierdurch die Zonen (Z1, Z2, ..., Z6) identifiziert.

4. Verfahren nach einem der vorhergehenden Ansprüche, **dadurch gekennzeichnet, dass** für zumindest eine Messanordnung (4, 4') die Zonen (Z1, Z2, ..., Z6) in dem Lichtmuster (LP) codiert sind, wobei die Auswerteeinrichtung (5) diese Codierung aus den erfassten Bildinformationen (IN) des Lichtmusters (LP) decodiert und hierdurch die Zonen (Z1, Z2, ..., Z6) identifiziert.

5. Verfahren nach Anspruch 4, **dadurch gekennzeichnet, dass** eine oder mehrere Zonen (Z1, Z2, ..., Z6) der Vielzahl von Zonen (Z1, Z2, ..., Z6) über Lichtfrequenzen und/oder über Helligkeiten im Lichtmuster (LP) codiert sind.

6. Verfahren nach Anspruch 5, **dadurch gekennzeichnet, dass** eine oder mehrere Zonen (Z1, Z2, ..., Z6) der Vielzahl von Zonen (Z1, Z2, ..., Z6) Streifen (S) mit unterschiedlichen Helligkeiten und/oder Frequenzspektren enthalten, wobei sich die Streifen (S) vorzugsweise senkrecht zur Biegelinie (BL) auf dem Werkstück (6) erstrecken.

7. Verfahren nach Anspruch 6, **dadurch gekennzeichnet, dass** die Streifen (S) aneinander angrenzen und an ihren benachbarten Rändern eindeutige Lichtfrequenz- und/oder Helligkeitsübergänge repräsentieren, die jeweils nur einmal im Lichtmuster (LP) vorkommen.

8. Verfahren nach einem der Ansprüche 4 bis 7, **dadurch gekennzeichnet, dass** eine oder mehrere Zonen (Z1, Z2, ..., Z6) der Vielzahl von Zonen (Z1, Z2, ..., Z6) über verschieden gemusterte Bereiche codiert sind.

9. Verfahren nach Anspruch 8, **dadurch gekennzeichnet, dass** ein jeweiliger gemusterter Bereich die gleichen Typen von graphischen Elementen (F1, F2, F3, F4) zur Musterbildung im jeweiligen gemusterten Bereich enthält, wobei sich die Typen von graphischen Elementen (F1, F2, F3, F4) zwischen den gemusterten Bereichen unterscheiden.

10. Verfahren nach einem der vorhergehenden Ansprüche, **dadurch gekennzeichnet, dass** für zumindest eine Messanordnung (4, 4') das Lichtmuster (LP) auch auf einen Bereich des Unterwerkzeugs (3) oder Oberwerkzeugs (2) abgebildet wird und durch Auswertung der mit der wenigstens einen Bilderfassungseinrichtung (8) erfassten Bildinformationen dieses Bereichs die Biegewinkel (BA) für die Zonen (Z1, Z2, ..., Z6) in Bezug zu diesem Bereich mittels der Auswerteeinrichtung (5) ermittelt werden.

11. Verfahren nach einem der vorhergehenden Ansprüche, **dadurch gekennzeichnet, dass** mehrere Messanordnungen (4, 4') an der Biegemaschine (1) positioniert sind, deren wenigstens eine Beleuchtungseinrichtung (7) Lichtmuster (LP) mit den gleichen oder überlappenden Ausdehnungen entlang der Biegelinie (BL) auf unterschiedliche Flächenabschnitte (SP) abbilden, wodurch mittels der Auswerteeinrichtung (5) für eine Vielzahl von Positionen oder Abschnitten entlang der Biegelinie (BL) jeweils mehrere Biegewinkel (BA) ermittelt werden, die auf Lichtmuster (LP) von unterschiedlichen Messanordnungen (4, 4') zurückgehen, wobei aus den mehreren Biegewinkeln (BA) mittels der Auswerteeinrichtung (5) ein gemittelter Biegewinkel oder ein Biegewinkel zwischen zwei um die Biegelinie (BL) gebogenen Biegebereichen des Werkstücks (6) für jede Position oder jeden Abschnitt berechnet wird, wobei alle Lichtmuster (LP) der mehreren Messanordnungen (4, 4') vorzugsweise die identische Aufteilung in Zonen (Z1, Z2, ..., Z6) entlang der Biegelinie (BL) enthalten.

12. Verfahren nach einem der vorhergehenden Ansprüche, **dadurch gekennzeichnet, dass** ausgelöst durch die Auswerteeinrichtung (5) ein oder mehrere Parameter der Biegemaschine (1) während des Biegeumformens in Abhängigkeit von den ermittelten Biegewinkeln (BA) verändert werden.

13. Verfahren nach einem der vorhergehenden Ansprüche, **dadurch gekennzeichnet, dass** die Biegemaschine (1) über eine automatisch betätigbare Bombierungseinrichtung zur Erzeugung einer Wölbung des Unterwerkzeugs (3) während des Biegeumformens verfügt, wobei diese Wölbung in Abhängigkeit von den ermittelten Biegewinkeln (BA) angepasst wird.

14. Vorrichtung zur Biegewinkelbestimmung an einer Biegemaschine (1), wobei die Biegemaschine (1) ein Oberwerkzug (2) und ein Unterwerkzeug (3) umfasst, um ein Werkstück (6), das zwischen Oberwerkzeug (2) und Unterwerkzeug (3) angeordnet ist, durch Biegen entlang einer Biegelinie (BL) umzuformen, wobei die Vorrichtung eine Auswerteeinrichtung (5) und eine oder mehrere Messanordnungen (4, 4') aufweist, wobei die Messanordnung (4, 4') oder Messanordnungen (4, 4') dazu eingerichtet sind, in einer Betriebsposition der Vorrichtung an der Biegemaschine (1) positioniert zu werden, und zusammen wenigstens eine Beleuchtungseinrichtung (7) und jeweils wenigstens eine Bilderfassungseinrichtung (8) beinhalten, wobei in der Betriebsposition jeder Messanordnung (4, 4') ein anderer Flächenabschnitt (SP) des Werkstücks (6) zugeordnet ist, der seitlich neben der Biegelinie (BL) liegt und sich entlang der Biegelinie (BL) erstreckt, wobei die Vorrichtung derart ausgestaltet ist, dass in der Betriebsposition:
- auf das Werkstück (6) mittels der wenigstens einen Beleuchtungseinrichtung (7) einer jeweiligen Messanordnung (4, 4') ein Lichtmuster (LP) auf den zugeordneten Flächenabschnitt (SP) abgebildet wird, wobei das Lichtmuster (LP) eine Vielzahl von Zonen (Z1, Z2, ..., Z6) enthält, die entlang der Biegelinie (BL) nebeneinander angeordnet sind;
- mittels der wenigstens einen Bilderfassungseinrichtung (8) der jeweiligen Messanordnung (4, 4') das Lichtmuster (LP) erfasst wird, wodurch Bildinformationen (IN) des Lichtmusters (LP) erhalten werden;
- mittels der Auswerteeinrichtung (5) aus den Bildinformationen (IN) des Lichtmusters (LP) der jeweiligen Messanordnung (4, 4') die darin enthaltenen Zonen (Z1, Z2, ..., Z6) identifiziert werden und für jede Zone (Z1, Z2, ..., Z6) ein durch Biegeumformen verursachter Biegewinkel (BA) des zugeordneten Flächenabschnitts (SP) des Werkstücks (6) ermittelt wird.

15. Vorrichtung nach Anspruch 14, **dadurch gekennzeichnet, dass** die Vorrichtung zur Durchführung eines Verfahrens nach einem der Ansprüche 2 bis 13 eingerichtet ist.

16. Biegemaschine, umfassend eine Vorrichtung zur Biegewinkelbestimmung nach Anspruch 14 oder 15.
